# EUROPEAN PATENT APPLICATION

(11) **EP 2 746 938 A1**
(43) Date of publication of application: **25.06.2014**
(21) Application number: 12198170.8
(22) Date of filing: 19.12.2012
(51) Int. Cl.: G06F 9/445

(54) **System and method for activating a software module**

(71) Applicant: Televic Rail NV, 8870 Izegem (BE)
(72) Inventor: Vanhoutte, Mattias, 9000 Gent (BE)
(74) Representative: Van Bladel, Marc

(57) **Abstract**

The present invention relates to a method for activating or deactivating a software module on a client device, comprising the steps of :
- loading the software module from a server on said client device, said service module containing at least one configured trigger imposing at least one prerequisite for activation or deactivation,
- checking on the client device whether all of said prerequisites are met,
- activating or deactivating the software module when the step of checking yields a positive outcome.

## Description

### Field of the invention

The present invention is generally related to the field of execution environments for electronically downloadable modules that need to be activated or deactivated.

### Background of the invention

In the past years solutions for delivering managed services to devices and local networks have become widely known and applied.

One well-known standard that has been developed is the Open Service Gateway initiative (OSGi). OSGi is a set of specifications that define a modular component system. An implementation of these specifications results in the OSGi framework which provides a framework for developing application components. Under the OSGi, a basic component is known as an OSGi bundle. An OSGi application can be made up of combinations/suites of bundles that might share common functionality. The components in the framework are loosely coupled and can communicate with each other by using services. To this extent, the OSGi framework allows developers to define the dependencies between the bundles such as the packages and services required by the bundles. The OSGi framework can also determine whether a device has the necessary packages and services. In a typical implementation, a device with a running OSGi framework wherein OSGi bundles are deployed, can dynamically install, start, stop, update and uninstall OSGi bundles without requiring a reboot. Also by using another management program on the device, the functions of the OSGi bundles can be controlled if the OSGi framework supports this. For example the bundles in the OSGi framework can be controlled programmatically or by using a web- or console based administration utility, if supported by the framework.

The OSGi environment is a framework providing an execution environment for electronically downloadable modular components, called bundles. The framework includes a Java runtime engine, life cycle management, data storage, version management and a service registry. Bundles can be Java applications, including classes, methods and other resources, which provide functions, or 'services', to end-users of a computing system and to other bundles. The OSGi technology provides a service-oriented architecture that enables bundles to dynamically discover each other for collaboration. Typically, bundles are stored in a standard Zip-based Java file format, or Java Archive (JAR) file. OSGi bundles can be activated and deactivated in the OSGi environment without restarting the whole OSGi framework.

However, software modules do not necessarily have to comply with the OSGi standard. Various alternatives are available. Impala is another dynamic modular productivity framework for Java-based web applications. Examples of open source modularized software, which implements the OSGi specifications in Java, are Apache Felix or Eclipse Equinox and Knoplerfish. However, the implementation of the OSGi specifications doesn't have to be restricted to standard Java implementations. Also other languages could be used for implementation of the OSGi specifications like for example C++. Examples of implementations of native C or C++ implementations of the OSGi specifications are Poco OSP, SOF, CTK, nOSGi and Celix.

A particular application field concerns the client-server communication between a single fixed location based off-board server and transportation vehicles (seen as clients), e.g. trains. One difficulty related to this environment is that it often is problematic to maintain an acceptable link quality over a long period of time. A remote OSGi framework on e.g. a train can be updated (downloading a specific OSGi bundle and starting this bundle) when there is a data connection from the wayside to the trainside. In case of bad link quality at the moment the remote OSGi framework needs to be updated, it may occur that a certain bundle cannot be activated on time.

Solutions for various problems related to the deployment and/or maintenance of service modules have been described, also in patent literature. Application US2004/194059 is concerned with the deployment of non-OSGi compliant services or resources within an OSGi compliant framework. It presents an 'OSGilnstallBundle' class that enables non-OSGi compliant resources, either Java, native code or some other format, to be downloaded from a server and installed on a client system running an OSGi framework. The OSGilnstallBundle class can be executed by a user or another bundle. The OSGilnstallBundle class manages non-OSGi resources by registering with the OSGi framework and evoking a start method.

Application US2005/223101 is concerned with resolving prerequisites for applications utilizing an OSGi framework. A native application intended for a client device is packaged within an OSGi bundle along with corresponding dependency information that identifies any prerequisites the native application might have to properly run on the client device. The client device is then polled to determine if it has the necessary prerequisites. If not, the prerequisites will be obtained and packaged within their own OSGi bundles (i.e., if they have not been previously packaged). Thereafter, the various OSGi bundles containing the native application and any needed prerequisites will be loaded on the client device.

Hence, there is a need for a solution where software modules can be downloaded without necessarily being deployed on the fly.

### Summary of the invention

It is an object of embodiments of the present invention to provide a solution wherein a managing software component can download software modules in advance and make its own decision to (de)activate a certain module in the OSGi framework, even without a network connection. It is a further object to provide for a solution wherein the activation or deactivation is made configurable.

The above objective is accomplished by the solution according to the present invention.

In a first aspect the invention relates to a method for activating or deactivating a software module on a client device. The method comprises the steps of :
- loading the software module from a server on the host device, said software module containing at least one configured trigger imposing at least one prerequisite for activation or deactivation,
- checking on the client device whether all of the prerequisites are met,
- activating or deactivating the software module when the step of checking yields a positive outcome.

In the proposed approach there is indeed a clear split between downloading the software module on the one hand and the actual (de)activation on the other hand. There may be a considerable amount of time between the download and the actual deployment of the software module. In order to activate or deactivate the module it is required that one or more conditions imposed by means of the configurable triggers be met.

In a preferred embodiment the step of checking is performed in a module for evaluating the configured triggers available on the client device. The checking then advantageously comprises requesting a validation from the module for evaluating, if the module for evaluating is indeed available on the client device. If no module for evaluating is available on the client device, preferably a step is performed wherein the client device informs the server of this fact. The server then responds to said step of informing by installing the missing module for evaluating.

In a preferred embodiment the at least one configured trigger is one of the following : an activation date trigger, a deactivation date trigger, a trigger indicative of a dependency on another module, a rollback trigger, a locked-trigger, a version trigger, a reactivate trigger.

In a preferred embodiment said software module is an OSGi module.

In another embodiment the configured triggers form a logical expression to be met.

The invention also relates to a program, executable on a programmable device containing instructions, which, when executed, perform the method as previously described.

In a further aspect the invention also relates to a system for activating or deactivating a software module. The system comprises at least one client device and a server, said server arranged for downloading to the at least one client device a software module containing at least one configured trigger imposing at least one condition to be met for activation or deactivation of the software module. The system comprises means for evaluating the configured triggers, said client device further arranged for activating or deactivating the software module if evaluation of the configured triggers yields a positive outcome.

The invention also relates to a transportation vehicle comprising at least one client device arranged for receiving a downloaded software module containing at least one configured trigger imposing at least one prerequisite for activation or deactivation, said at least one client device further arranged for evaluating the configured triggers and for activating or deactivating the software module when said evaluating yields a positive outcome.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 illustrates a sequence diagram of a download module request from a server to a client.

Fig.2 illustrates an interaction between server and client with Managing module and Trigger evaluation modules.

Fig.3 illustrates an interaction between server and client with Managing module and a missing Trigger evaluation module.

Fig.4 illustrates a time diagram of Scenario 1.

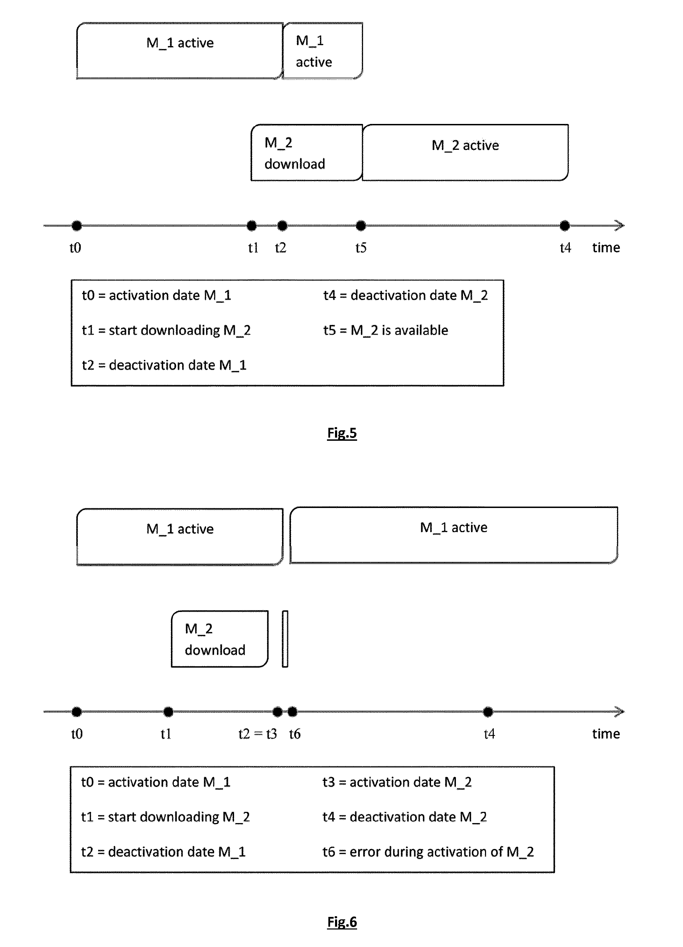

Fig.5 illustrates a time diagram of Scenario 2.

Fig.6 represents a time diagram of Scenario 3.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention proposes a solution for activating or deactivating an OSGi bundle on a remote OSGi framework. However, other examples wherein the same concepts for (de)activation are applicable, can be found in Impala, another dynamic modular productivity framework for Java-based web applications. In general, in this description the term 'module' refers to a software module (which could provide a certain service).

A module in the context of this invention can be external firmware, external libraries, external content, application framework, framework library or framework content. All of these modules have to be packaged in a valid OSGi bundle and need to be transferred from a central managing OSGi framework (server) to a remote OSGi framework (client). For example, a module as external content could contain media files which have to be available on the client, a module as external firmware could be the application-binary of an external application (which operates beside the running OSGi framework), a module as an application framework could be an OSGi service for registering log-information from other running OSGi modules in the framework. All required resources for the module are bundled in a set of files (e.g. an archive). The set of files at least comprises a configuration file. For example, the archive can be a JAR-file with a MANIFEST.MF file as configuration file. The configuration file contains OSGi headers to create a valid OSGi bundle. The configuration file also contains one or more configured triggers. The framework of the client uses triggers for activation or deactivation of a module. Only if the configured triggers for the module are satisfied, the module will be (de)activated autonomously by the managing module in the OSGi framework.

A client OSGi framework is to be construed as a combination of OSGi bundles which contains at least an OSGi bundle allowing to download packaged OSGi bundles from a server and (de)activate them according to the configured (de)activation configurations. This OSGi bundle is optionally also arranged for sending messages to the server OSGi framework. This managing OSGi bundle will be called "Managing module" in this description. In one embodiment software to evaluate the configured triggers is available on the client device. This can, for example, be a dedicated process on the client device, which could evaluate a trigger of a certain module e.g. by calling a web service. Alternatively, the OSGi framework may also contain one or more OSGi bundles which provide the functionality to evaluate one or certain possible (de)activation triggers for a downloaded OSGi bundle. This functionality could be available by a service in the OSGi framework. Such an OSGi bundle will be called "trigger evaluation module" in the further description below.

The software module is available on a server and has to be deployed to a remote client. The remote client receives a request from the server to download the module from the server. Alternatively, the remote client can launch a request for receiving a download or the client can check at regular time intervals whether new downloads are available. After downloading the module to the remote client, the module can be activated. For activation or deactivation of a module the framework evaluates configurable triggers. In each module a logical combination of triggers may be described, preferably contained in meta-data. Such a combination of triggers can be a statement with logical AND operators, but may also comprise OR, XOR or NOT operators.

Triggers for activation (in the meta-data of the module) can for example be :
- an activation date : module can only be activated after the activation date,
- an external trigger : module can only be activated if for example a hardware button is first pressed by someone,
- a dependency-trigger : trigger indicating if all the (OSGi) dependencies (for example libraries needed in the running framework) of the module are resolved,
- a rollback-trigger : if an error occurs while activating the module, re-activate automatically the last locked module, if this module exists.

Examples of triggers for deactivation can be the following :
- a deactivation date : module can only be deactivated after this date,
- an external trigger : module can only be deactivated if for example a hardware button is first pressed by someone,
- a version-trigger : trigger indicating that deactivation is only possible if a newer version of this module is available on the remote OSGi framework,
- a locked-trigger : the module is stored on file system of the client (and reused if a rollback occurs),
- a reactivate-trigger : while deactivating the module, the last locked module will be reactivated, if this module exists.

Note that apart from the above examples other configured triggers (present e.g. in the meta-data) can be used. Configuration of the triggers doesn't have to be restricted to configuration by means of a configuration file for every module. Standard trigger configurations for each module could for example be accessible by a local database on the client. Triggers can in certain embodiments also add functionality to the framework. For example, when the rollback trigger is configured for a module, the framework solves the problem of reactivating the last locked module with the same functionality. Even without a data connection on the moment of failure, the functionality of the module is available in the remote OSGi framework. Later, when there is a network connection of sufficient quality available, the server could be informed with a message that there was an error while activating the new module and that the last locked module is reactivated. The data connection is neither used for retransmitting the last locked module because it was available on the file system of the client.

Whereas in prior art solutions activation or deactivation of a module can start as soon as it is received, in the present approach a check of at least one configured activation trigger is performed. Also deactivation of the module is done autonomously, based on at least one configured deactivation trigger. Only if all the configured triggers in the metadata of the module are satisfied, the activation or deactivation of the module can be executed in the OSGi framework.

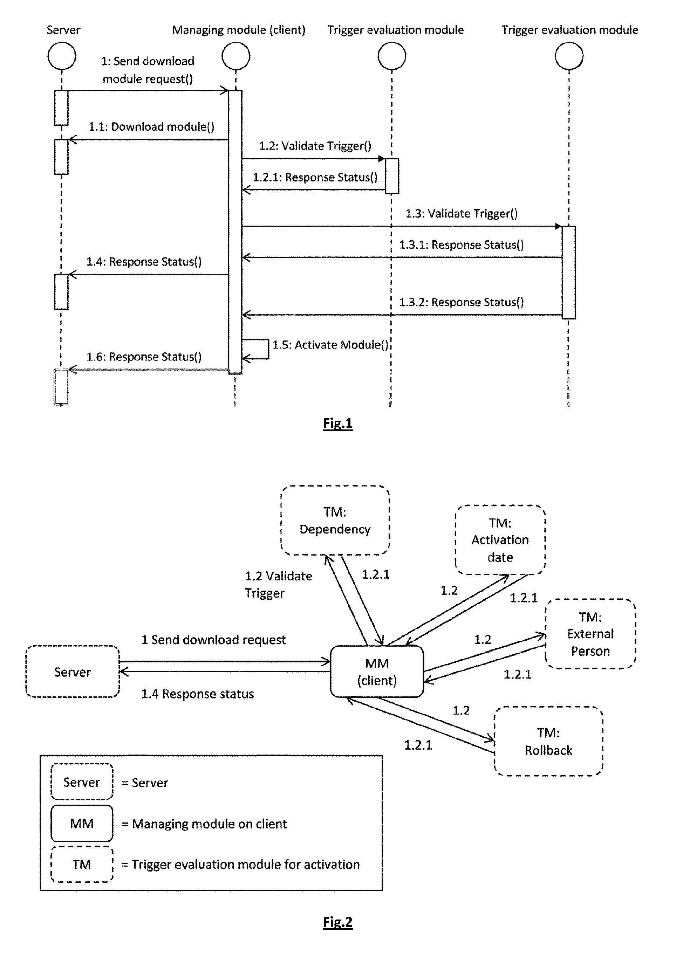

Fig.1 represents a sequence diagram of an update of a module 'X' from a server to a client device. The network connection between the server and the client is assumed to be of acceptable quality. The server requests the client to download an updated module to the client (step 1). The client downloads the module from the server. The configuration is taken to be a MANIFEST.MF file in this example. After the download (step 1.1), the Managing module on the client searches in the configuration file for activation and deactivation triggers for the module.
1.2 The Managing module on the client checks every configured trigger by searching for the installed trigger evaluation module in the system. If the trigger evaluation module is installed, the client asks to validate the trigger with the downloaded module. If the trigger evaluation module cannot evaluate the trigger, for example because the module is not present in the system, the Managing module can't activate the module. The client can inform the server about the missing trigger evaluation module. In step 1.2.1 the trigger evaluation module sends a response with the status of the configured trigger to the Managing module: the response confirms that the condition set by this trigger is satisfied.
1.3 The client checks for a second configured trigger. In 1.3.1 the trigger evaluation module sends a response with the status of the configured trigger: the response states that the trigger condition is not fulfilled yet. In 1.3.2 the trigger evaluation module sends a response with the status of the configured trigger: the response confirms that the trigger condition is met now. The trigger condition could be satisfied by an external change (e.g. with a configured external trigger for activation: an external person affirms to start the bundle after pushing a hardware button or with a configured activation time trigger for activation: the trigger condition will only be satisfied on the moment the activation time is passed).
1.4 The client has a network connection with the server and can send a message to inform the server that the first trigger is satisfied and the second configured trigger already evaluated once, but not yet satisfied. The server knows with this message that the required trigger evaluation module is installed on the remote OSGi framework, but the trigger is not yet satisfied.
1.5 The client activates the module because all configured triggers are confirmed. Message 1.3.2 from the trigger evaluation module confirms that the second configured trigger is also satisfied now.
1.6 The client has a network connection with the server and can send a message to inform the server that all triggers are confirmed and the module is activated now.

Fig.2 illustrates a possible system for (de)activating an OSGi module according to an embodiment of the invention. In the diagram can be distinguished the server, the client and some trigger evaluation modules for activation/deactivation on the client. Each trigger evaluation module is here implemented as a module in the system. By using separate modules for every trigger, it is possible to update the system with a new implementation of the trigger evaluation module with a new feature. This trigger evaluation module can be installed with the system (and activated) to make a new trigger evaluation module available for future updates.

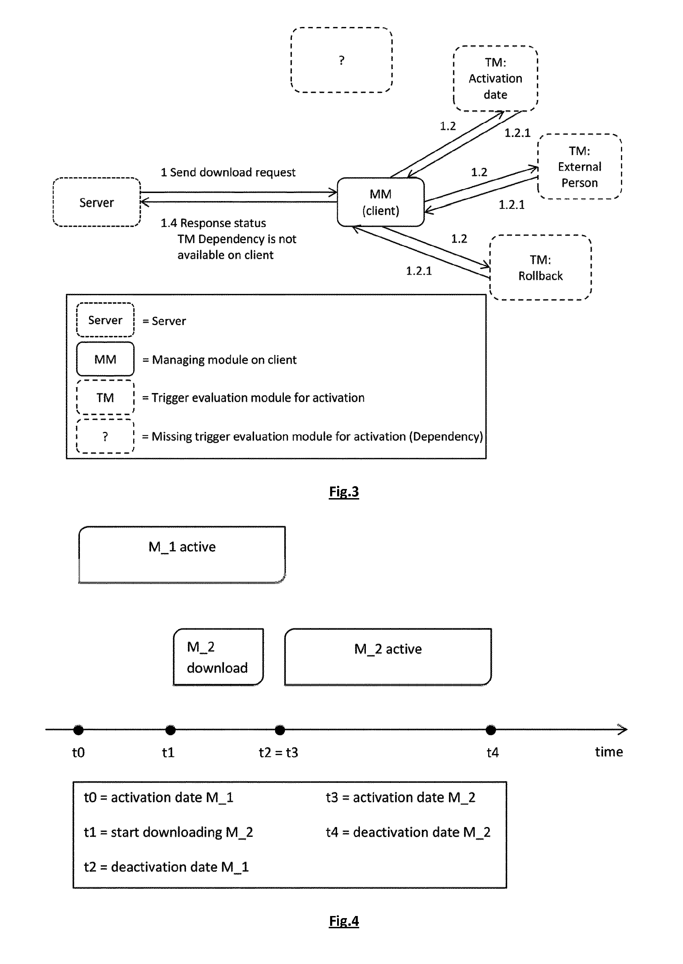

Fig. 3 is a diagram in which trigger evaluation module Dependency is not available on the client. The client wants to check this configured trigger for activation, but cannot find the trigger evaluation module. When there is a network connection with the server, the client informs the server about the missing module. The server can respond to this event by sending a request to download the required trigger evaluation module. Once the missing trigger module is installed and activated in the remote OSGi framework, the client can check all configured triggers for activation.

Illustrations of some possible application scenarios are now provided. Module M_1 is configured with triggers for activation: activation trigger with activation date t0, a dependency-trigger, rollback-trigger. The configured triggers for deactivation are : deactivation trigger with deactivation date t2, a version trigger, a locked-trigger. Module M_2 is configured with triggers for activation: activation trigger with activation date t3, a dependency trigger, rollback-trigger. configured triggers for deactivation: deactivation trigger with deactivation-date t4, a version trigger, a locked-trigger.

### Scenario 1

The module is received (downloaded) on time on the remote train, at t0: all dependencies of M_1 are resolved, so module M_1 is activated on t0.
At t2, the version-trigger is ok (M_2 is available (downloaded) on the remote client), so M_1 is deactivated, because of the locked-trigger, Module M_1 is stored on the file-system before deactivation.
At the same time (t2 = t3), all dependencies of M_2 are resolved so module M_2 is activated (on time).

### Scenario 2

The difference with the previous scenario is that M_2 could not start downloading on time because of the bad network link to the server. Hence, the module is received late on the remote train.
At t2, M_1 is not deactivated because the version-trigger indicates that there is no new module available on the remote client (M_2 is not yet downloaded).
At t5, the version-trigger indicates that a new module is available, so M_1 is deactivated and locked. At t5, M_2 could also be activated (all triggers are satisfied).

### Scenario 3

The difference with scenario 1 is that at the moment of activation of the new module M_2, an error occurs. The framework reactivates the old module (Rollback to old situation).
At t2, the version-trigger and deactivation-trigger conditions are both met, so M_1 is deactivated and locked.
At the same time (t2 = t3), all triggers of M_2 are satisfied, so M_2 starts activating.
At t6, an error occurs during activation of M_2, so M_2 is not active. Because of the rollback-trigger of M_2, the framework reactivate the last locked module (M_1). Because of the version-trigger of M_1, M_1 stays active (there is no newer version available on the remote client).

A specific use case to the railway is an update from a central server to a train (client) with a module (M_1) which contains content (data) about the timetable and possible connections of the train (content bundle). This content could be activated for the period of e.g. 1 year. These modules may have a locked-trigger for deactivation that saves the module on the train side when it is deactivated and a version trigger, which deactivates the bundle if a new bundle is available.

Due to delays of the train, the content could be updated for a short period with a new module (M_2). Module M_2 has to be activated for example immediately (trigger for activation) and has to be confirmed by the train crew by pressing a certain button in the train (external trigger). If the button is pressed by a member of the train crew, the module M_2 is activated. Because of the version trigger of module M_1, module M_1 will be deactivated. Because of the locked trigger of module M_1, module M_1 is saved on the train before deactivation.

Module M_2 could have for example two deactivation triggers: an external trigger and a reactivate trigger which reactivates the last locked module again after deactivation (M_1). When the train isn't delayed anymore, a person of the train crew confirms to deactivate module M_2 at a rural area (without network connection with the server). After deactivation of module M_2, module M_1 will be reactivated because of the reactivate trigger. All the passengers had exact information without a network connection on the train. When the train has a network connection to the server, the train (client) can inform the server that the last locked module is activated again.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for activating or deactivating a software module on a client device, comprising the steps of
- loading said software module from a server on said client device, said software module containing at least one configured trigger imposing at least one prerequisite for activation or deactivation,
- checking on said client device whether all of said prerequisites are met,
- activating or deactivating said software module when said step of checking yields a positive outcome.

2. Method for activating or deactivating as in claim 1, wherein said step of checking is performed in a module for evaluating said configured triggers available on said client device.

3. Method for activating or deactivating as in claim 2, wherein said checking comprises requesting a validation from said module for evaluating, if said module for evaluating is indeed available on said client device.

4. Method for activating or deactivating as in claim 3, wherein a step is performed of said client device informing said server if no module for evaluating is available on said client device.

5. Method for activating or deactivating as in claim 4, wherein said server responds to said step of informing by installing the missing module for evaluating.

6. Method for activating or deactivating as in any of claims 1 to 5, wherein said configured triggers form a logical expression to be met.

7. Method for activating or deactivating as in any of claims 1 to 6, wherein said at least one configured trigger is one of the following : an activation date trigger, a deactivation date trigger, a trigger indicative of a dependency on another module, a rollback trigger, a locked-trigger, a version trigger, a reactivate trigger.

8. Method for activating or deactivating as in any of the previous claims, wherein said software module is an OSGi module.

9. A program, executable on a programmable device containing instructions, which, when executed, perform the method as in any of the claims 1 to 8.

10. System for activating or deactivating a software module, comprising at least one client device and a server, said server arranged for downloading to said at least one client device a software module containing at least one configured trigger imposing at least one condition to be met for activation or deactivation of said software module, said system comprising means for evaluating said configured triggers, said client device further arranged for activating or deactivating said software module if evaluation of said configured triggers yields a positive outcome.

11. Transportation vehicle comprising at least one client device arranged for receiving a downloaded software module containing at least one configured trigger imposing at least one prerequisite for activation or deactivation, said at least one client device further arranged for evaluating said configured triggers and for activating or deactivating said software module when said evaluating yields a positive outcome.
